# EUROPÄISCHE PATENTSCHRIFT

(11) **EP 3 931 052 B1**
(45) Veröffentlichungstag und Bekanntmachung des Hinweises auf die Patenterteilung: **11.01.2023**
(21) Anmeldenummer: 20707619.1
(22) Anmeldetag: 27.02.2020
(51) Int. Cl.: B60S 1/40

(54) **SCHEIBENWISCHERVORRICHTUNG**
WINDSCREEN WIPER DEVICE
DISPOSITIF D'ESSUIE-GLACE

(30) Priorität: 28.02.2019 DE 102019202678
(43) Veröffentlichungstag der Anmeldung: 05.01.2022
(73) Patentinhaber: Robert Bosch GmbH, 70442 Stuttgart (DE)
(72) Erfinder: DEPONDT, Helmut, 3370 Boutersem (BE); CAMPSTEYN, Matthew, 3730 Hoeselt (BE)
(86) Internationale Anmeldenummer: PCT/EP2020/055144
(87) Internationale Veröffentlichungsnummer: WO 2020/174045

(56) Entgegenhaltungen:
- DE-A1-102011 118 220
- DE-U1-202010 017 492

## Beschreibung

### Stand der Technik

Die Erfindung betrifft eine Scheibenwischervorrichtung zum Verbinden eines Wischblatts mit einem Wischarm nach der Gattung des unabhängigen Anspruchs.

Ein Scheibenwischer bzw. Wischblatt wird mit einem Wischarm über einen Adapter verbunden, um die Montage des Wischblatt am Fahrzeug und das Wechseln zu ermöglichen. Üblicherweise, aber nicht notwendig, besteht dieser Adapter zwei Teilen, die miteinander um eine Achse drehbar verbunden sind. Dabei ist ein Adapterunterteil mit dem Wischblatt verbunden, insbesondere einer tragenden Struktur wie Federstahlbändern als Tragelement eines Flachbalkenwischers, und weist das Adapteroberteil Anschlusselemente für den Wischarm auf. Dadurch kann sich das an dem Wischarm über den Adapter montierte Wischblatt während der Wischbewegung in einem vorgesehenen Umfang der Neigung und Krümmung der Scheibe gegenüber dem Wischarm anpassen. Für die Verbindung des Adapteroberteils mit dem Wischarm wird eine leicht und intuitiv zu bedienende sowie sicher haltende Verbindung angestrebt, die auch wieder gut zu demontieren ist.

Aus der DE 10 2005 016 485 A1 ist eine Vorrichtung zum gelenkigen Verbinden eines Wischblatts mit einem Wischarm eines Scheibenwischers bekannt, die ein mit dem Wischarm fest verbundenes Verbindungselement und ein mit einem Tragelement des Wischblatts fest verbundenes Anschlusselement umfasst, das ein Lagerelement trägt, das mit einem Lagerelement an einem Adapter aus Kunststoff ein Schwenklager bildet, wobei der Adapter in dem zum Anschlusselement hin offenen Profil des Verbindungselements durch Rastelemente und Halteelemente fixiert ist, wobei das Verbindungselement, ein im Wesentlichen quaderförmiger Hohlkörper ist, der auf der dem Anschlusselement zugewandten Seite offen ist und an dem an einer Längsseite ein Befestigungselement angeformt ist, das die Längsseite abdeckt und am Ende des Wischarms befestigt ist.

Aus der gattungsgemäßen DE 20 2010 017 492 U1 ist eine Verbindungsanordnung zum Verbinden eines Wischblatts mit einem Wischarm für eine Scheibenwischanlage eines Fahrzeugs, mit einem zum Halten des Wischblatts ausgebildeten Anbindungselement bekannt, welches an den Wischarm in eine Montagerichtung montierbar ist, welche quer zu einer durch die Wischbewegung des Wischblatts definierbaren Wischfläche verläuft, wobei die Verbindungsanordnung wenigstens ein Sicherungselement zum lagegesicherten Halten des Anbindungselements an dem Wischarm aufweist, wobei das wenigstens eine Sicherungselement als an dem Wischarm angeordneter Schieber ausgebildet ist, welcher entlang des Wischarms aus einer Montagestellung in eine das Anbindungselement sichernde Funktionsstellung verschiebbar ist. Dabei weist der Wischarm wenigstens eine in die Montagerichtung offene Ausnehmung auf, welche zum Aufnehmen eines an dem Anbindungselement ausgebildeten korrespondierenden Vorsprungs ausgebildet ist. Der Schieber weist an seinem unteren Ende eine Leiste mit Unterbrechungen auf, die so positioniert sind, dass in der Funktionsstellung in den Ausnehmungen die korrespondierenden Vorsprünge gehalten werden, während sie in der Montagestellung herausgezogen werden können.

### OFFENBARUNG DER ERFINDUNG

Die Erfindung ist im beigefügten Anspruchssatz beschrieben.

Der Scheibenwischervorrichtung mit den Merkmalen des Hauptanspruchs 1 hat den Vorteil, dass die Herstellung der Verbindung von Wischarm und Adapteroberteil leicht und intuitiv erfolgen kann. Insbesondere ist es nicht nötig, zur Vorbereitung den Sicherungsschieber in eine geöffnete Position zu bringen. Nach dem Aufdrücken und Einrasten ist die Scheibenwischervorrichtung sofort betriebsbereit. Gleichzeitig ergibt sich eine sichere und feste Verbindung durch die an der Seitenwand anliegende Innenwand zur Übertragung von Führungskräften bei gleichzeitiger Sicherung durch die Rastverbindung. Beispielsweise kann der Sicherungsschieber als unten offene Hülse über dem Anschlussteil geführt sein, auf dem er durch die Rastleiste, die partiell an der Unterkante der Seitenwände des Anschlussteils anliegt, gehalten wird. In der Demontageposition liegen dann immer Öffnungen bzw. fehlende Abschnitte der Rastleiste unter den Ausnehmungen. Wenn sich im Inneren des Anschlussteils, das ebenfalls als unten offenes Profil, beispielsweise ein U-Profil ausgestaltet sein kann, ein Adapteroberteil befindet mit den Rastnasen in den Ausnehmungen, kann es in der Demontageposition herausgezogen werden. In der Funktionsstellung des Sicherungsschiebers kann das Anschlussteil auf das Adapteroberteil aufgedrückt werden bis zum Einrasten, indem Abschrägungen an der Rastleiste mit beispielsweise ebenfalls Abschrägungen an den Rastnasen zusammenwirken und die Innenwand bzw. Wandabschnitte des Sicherungsschiebers elastisch nach außen gedrückt werden, bis die Rastleiste über die Rastnasen gleitet. Hierbei ist es jedoch ausreichend, wenn nur an einem von beiden, entweder den Rastnasen oder der Rastleiste eine Abschrägung vorliegt.

Durch die in den Unteransprüchen aufgeführten Maßnahmen ergeben sich weiterhin vorteilhafte Weiterbildungen und Verbesserungen der in dem Hauptanspruch angegebenen Merkmale.

Vorteilhaft ist es, wenn die Ausnehmungen und Rastnasen beidseits, insbesondere symmetrisch beidseits einer Mittelebene von Anschlussteil und Adapteroberteil angeordnet sind. Dadurch werden symmetrische Haltekräfte ausgeübt.

In einer vorteilhaften Ausgestaltung sind mehr als ein Paar Ausnehmungen und Rastnasen, insbesondere zwei Paar oder drei Paar angeordnet. Wenn nur ein Paar von Rastnasen bzw. Ausnehmungen vorgesehen wird, ermöglicht dies eine sehr kompakte und kurze Ausbildung des Adapters bzw. des Anschlussteils. Durch eine Mehrzahl kann jedoch vorteilhaft eine größere Redundanz, ein sicherer Halt und die Vermeidung eines Kippspiels um eine Querachse erreicht werden.

Vorteilhaft weist der Anschlussteil einen umgedreht U-förmigen Querschnitt auf, stellt insbesondere den freien Endabschnitt des Wischarms dar. Das Hauptelement eines Wischarms ist üblicherweise ein Metallprofil. Es ist dadurch kostengünstig möglich, den Endabschnitt eines solchen Metallprofils als Anschlussteil einzusetzen.

In einer günstigen Ausgestaltung weist der Sicherungsschieber eine vordere Querwand auf, die in der Funktionsstellung an ein Kopfende des Anschlussteils anschlägt. Dadurch lässt sich der Sicherungsschieber nur bis zu einer definierten Stellung auf den Wischarm bzw. das Anschlussteil aufschieben. Diese entspricht dann der Funktionsstellung.

Vorteilhaft weist der Sicherungsschieber mindestens einen Anschlag auf der mit einem Anschlag des Anschlussteils zusammen wirkt, sodass ein weiteres Abziehen des Sicherungsschiebers von dem Wischarm über die Demontagestellung hinaus verhindert wird. Bei einer Demontage wird dadurch der unbeabsichtigte Verlust des Sicherungsschiebers verhindert. Bei der Herstellung der Scheibenwischervorrichtung kann der Sicherungsschieber aufgeschoben werden und durch die Elastizität des Anschlags über den Gegenanschlag gleiten.

Vorteilhaft besteht der Sicherungsschieber aus Kunststoff. Insbesondere als Spritzgussteil können aufwändige Formteile leicht hergestellt werden. Durch die Wahl entsprechender Kunststoffe kann auch die gewünschte Elastizität erreicht werden.

Vorteilhaft kann der Adapteroberteil über ein Drehgelenk mit einem Adapterunterteil verbunden sein, das an einem Tragelement eines Flachbalkenscheibenwischer befestigt werden kann.

### Beschreibung der Zeichnungen

Ausführungsbeispiele sind in den Zeichnungen dargestellt und in der nachfolgenden Beschreibung näher erläutert. Es zeigen:
Fig. 1 eine Scheibenwischervorrichtung in Perspektivansicht,
Fig. 2 die Scheibenwischervorrichtung im Querschnitt,
Fig. 3 die Scheibenwischervorrichtung im Querschnitt beim Aufdrücken,
Fig. 4 die Scheibenwischervorrichtung im Querschnitt in Funktionsstellung,
Fig. 5 den Sicherungsschieber in Funktionsstellung,
Fig. 6 den Sicherungsschieber in Demontagestellung,
Fig. 7 ein weiteres Beispiel eines Wischarms,
Fig. 8 einen Adapter zu dem Beispiel der Fig. 7,
Fig. 9 den Sicherungsschieber in Demontagestellung,

### Beschreibung der Ausführungsbeispiele

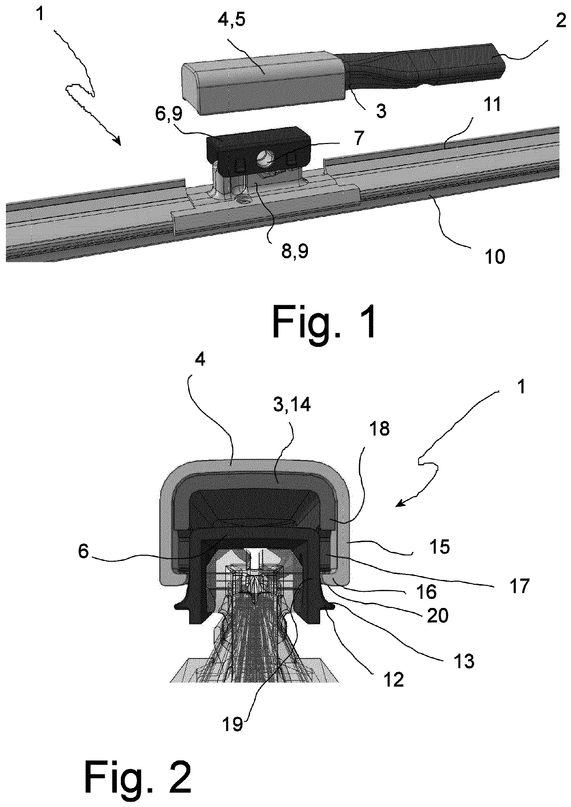

Die Fig. 1 zeigt die Scheibenwischervorrichtung 1 in Perspektivansicht. An einem freien Ende eines Wischarms 2 befindet sich ein Anschlussteil 3, auf dem ein Sicherungsschieber 4 in Form einer nach unten offenen Hülse 5 verschiebbar angeordnet ist. Der Anschlussteil 3 kann auf ein Adapteroberteil 6 gesetzt werden, das über ein Drehgelenk 7 mit einem Adapterunterteil 8 verbunden ist und mit diesem zusammen den Adapter 9 bildet. An dem Adapterunterteil 8 ist ein Flachbalkenscheibenwischer 10 mit einem Spoiler 11 und hier nicht weiter zu erkennenden Tragelementen befestigt.

Die Fig. 2 zeigt die Scheibenwischervorrichtung 1 im Querschnitt. An dem Adapteroberteil 6 sind Rastnasen 12 mit einer oberen Anschrägung 13 in einer Seitenwand 19 angeformt. Das Anschlussteil 3 in Form eines nach unten offenen U-Profils 14 ist mit dem Sicherungsschieber 4 zusammen locker auf das Adapteroberteil 6 aufgesetzt, um es durch Aufdrücken zu montieren. An einer Wand 15 des Sicherungsschiebers 4 befinden sich am unteren Ende Rastleisten 16, die hier Ausnehmungen 17 in einer Innenwand 18 des Anschlussteils 3 überdecken, und die ebenfalls eine Anschrägung 20 aufweisen.

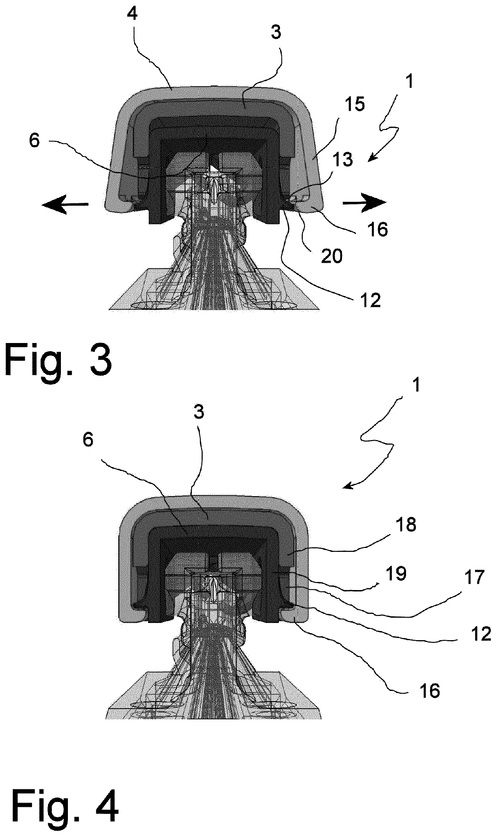

Die Fig. 3 zeigt die Scheibenwischervorrichtung 1 im Querschnitt beim Aufdrücken. Wenn der Sicherungsschieber 4 zusammen mit dem Anschlussteil 3 von oben auf das Adapteroberteil 6 gedrückt wird, wird durch die Anschrägungen 13 der Rastnasen 12 über die Anschrägungen 20 der Rastleiste 16 die Wand 15 des Sicherungsschiebers 4 nach außen gedrückt, wie durch die Pfeile angedeutet, bis die Rastleiste 16 über die Rastnasen 12 hinwegkommen.

Die Fig. 4 zeigt die Scheibenwischervorrichtung 1 im Querschnitt in Funktionsstellung. Das Anschlussteil 3 sitzt auf dem Adapteroberteil 6 und durch die an der Seitenwand 19 anliegende Innenwand 18 des Adapteroberteils 6 können Querkräfte übertragen werden. Die Rastleiste 16 hält die Rastnasen 12 in den Ausnehmungen 17 und sichert dadurch das Adapteroberteil 6 in dem Anschlussteil 3.

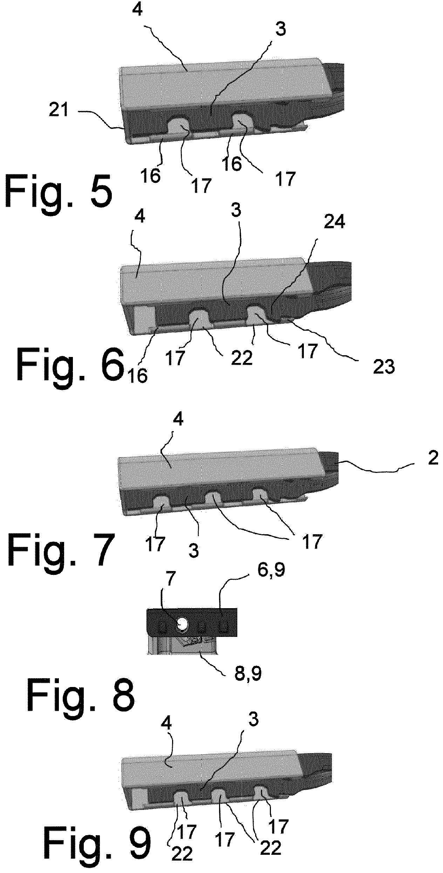

Die Fig. 5 zeigt den Sicherungsschieber 4 in Funktionsstellung. Eine vordere Querwand 21 stößt an das freie Ende des Anschlussteils 3 an und definiert die Position der Funktionsstellung. Bei dem vorliegenden Beispiel kommen zwei Paare von Ausnehmungen 17 zum Einsatz. Es ist auch denkbar, nur ein Paar von Ausnehmungen zu verwenden und dadurch eine kürzere Bauform zu erreichen. Die Ausnehmungen 17 werden von der Rastleiste 16 überdeckt, sodass bei eingesetztem Adapteroberteil 6 die Rastnasen 12 gesichert werden.

Die Fig. 6 zeigt den Sicherungsschieber 4 in Demontagestellung, bei der unter den Ausnehmungen 17 Unterbrechungen 22 der Rastleiste 16 zu liegen kommen. Ein Anschlag 23 des Sicherungsschiebers 4 wirkt mit einem Anschlag 24 des Anschlussteils 3 zusammen, definiert die Position der Demontagestellung als andere Maximalstellung des Verschiebewegs und verhindert ein Abziehen des Sicherungsschiebers 4 von dem Anschlussteil 3.

Die Fig. 7 zeigt ein weiteres Beispiel eines Wischarms 2 mit Sicherungsschieber 4 in Funktionsstellung und Anschlussteil 3, wobei bei diesem Ausführungsbeispiel drei Paare von Ausnehmungen 17 vorgesehen sind.

Die Fig. 8 zeigt einen Adapter 9 mit dem Adapteroberteil 6 und dem Adapterunterteil 8, die über das Gelenk 7 verbunden sind, zu dem Beispiel der Fig. 7. Bei diesem Ausführungsbeispiel sind drei Paare von Rastnasen 12 vorgesehen.

Die Fig. 9 zeigt den Sicherungsschieber 4 in Demontagestellung, bei der unter den drei Paaren von Ausnehmungen 17 in dem Anschlussteil 3 jeweils Unterbrechungen 22 der Rastleiste 16 des Sicherungsschiebers 4 zu liegen kommen.

## Patentansprüche

1. Scheibenwischervorrichtung bestehend aus einem Wischarm (2) und einem Adapter (9) zum Halten eines Wischblatts (10) mit einem Adapteroberteil (6), der an mindestens einer Seitenwand (19) mindestens eine Rastnase (12) aufweist, wobei ein Anschlussteil (3) des Wischarms (2) mit einer Innenwand (18) an der Seitenwand (19) anliegt und in der Innenwand (18) eine zu der Rastnase (12) korrespondierende Ausnehmung (17) ist, in der die Rastnase (12) sich im Montagezustand befindet, sowie mit einem Sicherungsschieber (4), der von dem Anschlussteil (3) geführt wird und zwischen einer Demontagestellung und einer Funktionsstellung verschiebbar ist auf dem Anschlussteil (3), wobei ein Wandabschnitt (15) des Sicherungsschiebers (4) über den Anschlussteil (3) greift und mit einer Rastleiste (16) unterhalb der Seitenwand eingreift und die Rastleiste (16) Unterbrechungen (22) derart aufweist, dass in der Funktionsstellung die Rastleiste (16) die Rastnase (12) in der Ausnehmung (17) hält sowie in der Demontagestellung eine Unterbrechung (22) der Rastleiste (16) unter der Ausnehmung (17) zu liegen kommt, um ein Herausziehen des Adapteroberteils (3) zu ermöglichen,
**dadurch gekennzeichnet,**
**dass** der Wandabschnitt (15) und/oder die Seitenwand (19) eine elastische Verformbarkeit aufweist und mindestens eine angeformte Abschrägung (20) an der Unterseite der Rastleiste (16) und/oder der Oberseite (13) der Rastnase (12) ausgebildet ist, sodass der Anschlussteil (3) mit dem Sicherungsschieber (4) in Funktionsstellung auf den Adapteroberteil (3) bis zu einem Einrasten gedrückt werden kann.

2. Scheibenwischervorrichtung nach Anspruch 1,
**dadurch gekennzeichnet,**
**dass** Ausnehmungen (17) und Rastnasen (12) beidseits, insbesondere symmetrisch beidseits einer Mittelebene von Anschlussteil (3) und Adapteroberteil (7) angeordnet sind.

3. Scheibenwischervorrichtung nach Anspruch 2,
**dadurch gekennzeichnet,**
**dass** mehr als ein Paar Ausnehmungen (17) und Rastnasen (12), insbesondere zwei Paar oder drei Paar angeordnet sind.

4. Scheibenwischervorrichtung nach Anspruch 2 oder 3,
**dadurch gekennzeichnet,**
**dass** der Anschlussteil (3) einen umgedreht U-förmigen Querschnitt (14) aufweist, insbesondere den freien Endabschnitt des Wischarms (2) darstellt.

5. Scheibenwischervorrichtung nach einem der vorhergehenden Ansprüche,
**dadurch gekennzeichnet,**
**dass** der Sicherungsschieber (4) eine vordere Querwand (21) aufweist, die in der Funktionsstellung an ein Kopfende des Anschlussteils (3) anschlägt.

6. Scheibenwischervorrichtung nach einem der vorhergehenden Ansprüche,
**dadurch gekennzeichnet,**
**dass** der Sicherungsschieber (4) mindestens einen Anschlag (23) aufweist der mit einem Anschlag (24) des Anschlussteils (3) zusammen wirkt, sodass ein weiteres Abziehen des Sicherungsschiebers (4) von dem Wischarm (2) über die Demontagestellung hinaus verhindert wird.

7. Scheibenwischervorrichtung nach einem der vorhergehenden Ansprüche,
**dadurch gekennzeichnet,**
**dass** der Sicherungsschieber (4) aus Kunststoff besteht.

8. Scheibenwischervorrichtung nach einem der vorhergehenden Ansprüche,
**dadurch gekennzeichnet,**
**dass** der Adapteroberteil (6) über ein Drehgelenk (7) mit einem Adapterunterteil (9) verbunden ist, die an einem Tragelement eines Flachbalkenscheibenwischer (10) befestigt werden kann.

## Claims

1. Windscreen wiper device consisting of a wiper arm (2) and an adapter (9) for holding a wiper blade (10) with an adapter upper part (6), which has at least one latching lug (12) on at least one side wall (19), wherein a connection part (3) of the wiper arm (2) lies with an inner wall (18) on the side wall (19) and, in the inner wall (18), is a recess (17) which corresponds to the latching lug (12) and in which the latching lug (12) is located in the assembled state, and with a securing slide (4) which is guided by the connection part (3) and is displaceable on the connection part (3) between a removal position and a functional position, wherein a wall portion (15) of the securing slide (4) reaches over the connection part (3) and engages with a latching strip (16) below the side wall, and the latching strip (16) has interruptions (22) in such a manner that, in the functional position, the latching strip (16) holds the latching lug (12) in the recess (17) and, in the removal position, an interruption (22) in the latching strip (16) comes to lie under the recess (17) in order to enable the adapter upper part (3) to be pulled out, **characterized**
**in that** the wall portion (15) and/or the side wall (19) have/has elastic deformability, and at least one integrally formed bevel (20) is formed on the underside of the latching strip (16) and/or on the top side (13) of the latching lug (12) such that the connection part (3) can be pressed with the securing slide (4) in the functional position onto the adapter upper part (3) until latching occurs.

2. Windscreen wiper device according to Claim 1, **characterized**
**in that** recesses (17) and latching lugs (12) are arranged on both sides, in particular symmetrically on both sides of a central plane of connection part (3) and adapter upper part (7).

3. Windscreen wiper device according to Claim 2, **characterized**
**in that** more than one pair of recesses (17) and latching lugs (12), in particular two pairs or three pairs, are arranged.

4. Windscreen wiper device according to Claim 2 or 3, **characterized**
**in that** the connection part (3) has an inverted U-shaped cross-section (14), in particular constitutes the free end portion of the wiper arm (2) .

5. Windscreen wiper device according to one of the preceding claims,
**characterized**
**in that** the securing slide (4) has a front transverse wall (21) which, in the functional position, strikes against a head end of the connection part (3).

6. Windscreen wiper device according to one of the preceding claims,
**characterized**
**in that** the securing slide (4) has at least one stop (23) which interacts with a stop (24) of the connection part (3) such that further pulling off of the securing slide (4) from the wiper arm (2) beyond the removal position is prevented.

7. Windscreen wiper device according to one of the preceding claims,
**characterized**
**in that** the securing slide (4) is composed of plastic.

8. Windscreen wiper device according to one of the preceding claims,
**characterized**
**in that** the adapter upper part (6) is connected via a rotary joint (7) to an adapter lower part (9) which can be fastened to a supporting element of a flat bar windscreen wiper (10).

## Revendications

1. Dispositif d'essuie-glace constitué d'un bras d'essuie-glace (2) et d'un adaptateur (9) pour maintenir un balai d'essuie-glace (10) avec une partie supérieure d'adaptateur (6), qui présente au moins un ergot d'encliquetage (12) sur au moins une paroi latérale (19), une partie de raccordement (3) du bras d'essuie-glace (2) s'appliquant par une paroi intérieure (18) contre la paroi latérale (19) et un évidement (17) correspondant à l'ergot d'encliquetage (12) étant ménagé dans la paroi intérieure (18), dans lequel se trouve l'ergot d'encliquetage (12) à l'état monté, ainsi qu'avec un coulisseau de sécurité (4), qui est guidé par la partie de raccordement (3) et qui peut être déplacé sur la partie de raccordement (3) entre une position de démontage et une position de fonctionnement, une section de paroi (15) du coulisseau de sécurité (4) s'engageant au-dessus de la partie de raccordement (3) et s'engageant avec une barrette d'encliquetage (16) sous la paroi latérale et la barrette d'encliquetage (16) présentant des interruptions (22) de telle sorte que, dans la position de fonctionnement, la barrette d'encliquetage (16) maintient l'ergot d'encliquetage (12) dans l'évidement (17) et, dans la position de démontage, une interruption (22) de la barrette d'encliquetage (16) vient se placer sous l'évidement (17) pour permettre le retrait de la partie supérieure d'adaptateur (3),
**caractérisé en ce que**
la section de paroi (15) et/ou la paroi latérale (19) présentent une déformabilité élastique et au moins un chanfreinage rapporté (20) est formé sur le côté inférieur de la barrette d'encliquetage (16) et/ou sur le côté supérieur (13) de l'ergot d'encliquetage (12), de sorte que la partie de raccordement (3) avec le coulisseau de sécurité (4) peut être pressée en position de fonctionnement sur la partie supérieure d'adaptateur (3) jusqu'à un encliquetage.

2. Dispositif d'essuie-glace selon la revendication 1, **caractérisé en ce que**
des évidements (17) et des ergots d'encliquetage (12) sont agencés des deux côtés, notamment symétriquement des deux côtés, d'un plan médian de la partie de raccordement (3) et de la partie supérieure d'adaptateur (7).

3. Dispositif d'essuie-glace selon la revendication 2, **caractérisé en ce que**
plus d'une paire d'évidements (17) et d'ergots d'encliquetage (12), notamment deux paires ou trois paires, sont agencées.

4. Dispositif d'essuie-glace selon la revendication 2 ou 3,
**caractérisé en ce que**
la partie de raccordement (3) présente une section transversale en forme de U inversé (14), notamment constitue la section d'extrémité libre du bras d'essuie-glace (2).

5. Dispositif d'essuie-glace selon l'une quelconque des revendications précédentes,
**caractérisé en ce que**
le coulisseau de sécurité (4) présente une paroi transversale avant (21) qui, dans la position de fonctionnement, vient en butée contre une extrémité de tête de la partie de raccordement (3).

6. Dispositif d'essuie-glace selon l'une quelconque des revendications précédentes,
**caractérisé en ce que**
le coulisseau de sécurité (4) présente au moins une butée (23) qui coopère avec une butée (24) de la partie de raccordement (3), de telle sorte qu'un retrait supplémentaire du coulisseau de sécurité (4) du bras d'essuie-glace (2) au-delà de la position de démontage est empêché.

7. Dispositif d'essuie-glace selon l'une quelconque des revendications précédentes,
**caractérisé en ce que**
le coulisseau de sécurité (4) est constitué de matière plastique.

8. Dispositif d'essuie-glace selon l'une quelconque des revendications précédentes,
**caractérisé en ce que**
la partie supérieure d'adaptateur (6) est reliée par l'intermédiaire d'une articulation tournante (7) à une partie inférieure d'adaptateur (9), qui peut être fixée à un élément de support d'un essuie-glace à barre plate (10).
